(19) Europäisches Patentamt / European Patent Office / Office européen des brevets

(11) **EP 2 160 926 B1**

(12) **EUROPÄISCHE PATENTSCHRIFT**

(45) Veröffentlichungstag und Bekanntmachung des Hinweises auf die Patenterteilung:
**12.09.2018  Patentblatt 2018/37**

(21) Anmeldenummer: **07786803.2**

(22) Anmeldetag: **22.06.2007**

(51) Int Cl.:
***H05B 33/08*** *(2006.01)*

(86) Internationale Anmeldenummer:
**PCT/EP2007/056232**

(87) Internationale Veröffentlichungsnummer:
**WO 2009/000310 (31.12.2008 Gazette 2009/01)**

(54) **VORWÄRTSREGELUNG VON HALBLEITERLICHTQUELLN**

FEEDFORWARD CONTROL OF SEMICONDUCTOR LIGHT SOURCES

RÉGLAGE PROGRESSIF DE SOURCES DE LUMIÈRE SEMI-CONDUCTRICES

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**10.03.2010  Patentblatt 2010/10**

(73) Patentinhaber: **OSRAM GmbH**
**80807 München (DE)**

(72) Erfinder:
• **HYING, Ralf**
  **81827 München (DE)**
• **NIEDERMEIER, Peter**
  **80995 München (DE)**

(56) Entgegenhaltungen:
**EP-A- 1 594 346      WO-A-02/082416**
**WO-A-2006/126124    DE-A1- 19 930 174**
**FR-A- 2 714 564      US-A- 3 705 316**
**US-A1- 2002 196 595  US-A1- 2003 071 821**
**US-A1- 2005 116 921  US-A1- 2006 245 174**
**US-A1- 2007 013 322  US-B1- 6 242 870**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

## Technisches Gebiet

Die Erfindung betrifft ein Regelungsverfahren für Halbleiterlichtquellen, das für Anwendungen geeignet ist, die eine sehr schnelle Ansteuerung der Halbleiterlichtquellen voraussetzen. Dies ist z.B. bei Front und Rückprojektionsanwendungen der Fall.

## Stand der Technik

Leistungsstarke Halbleiterlichtquellen wie Hochleistungsleuchtdioden werden in jüngerer Zeit zunehmend in Anwendungen eingesetzt, die bisher Hochdruck-Entladungslampen vorbehalten waren. Gerade im Projektionsbereich werden die Halbleiterlichtquellen nicht kontinuierlich angesteuert, sondern gepulst betrieben, um den dortigen Anforderungen gerecht zu werden. Dabei wird mit sehr kurzen Pulsen gearbeitet, die dafür eine sehr hohe Leistungsdichte besitzen.

Aus der EP 1 594 346 A2 ist ein Verfahren zur Ansteuerung einer Blinkleuchte für Kraftfahrzeuge bekannt, bei dem die Halbleiterlichtquellen mit einer PWM angesteuert werden, um das Verhalten einer Glühlampe nachzuahmen.

Aus der US 2006/0245174 A1 ist ein Verfahren zur Regelung einer Leuchte bekannt, bei dem die Lichtabgabe verschiedener in der Leuchte eingebauter Halbleiterlichtquellen gemessen und derart geregelt wird, dass ein vorbestimmter Farbort erreicht wird. Aus der US2002/0196595 A1 ist ein Verfahren bekannt, in welchem eine Laserdiode mittels einer Forwärtsregelung auf eine konstante Ausgangsleistung geregelt wird. Die Regelung nutzt dafür vorab in einem Kennfeld gespeicherte Steuerungsströme, welche von der Temperatur abhängen. Somit wird eine temperaturkompensierte Regelung der Laserdiode auf eine konstante Ausgangsleistung erreicht.

Da bei heutigen Halbleiterlichtquellen die Lichtabgabe mehr oder minder stark von der Temperatur der Halbleiterlichtquellen selbst abhängt, ist eine Regelung notwendig, die sicherstellt, dass die von einer Projektionseinheit abgegebene Lichtmenge Gleichbleibt. Da gepulste Ansteuerverfahren erst seit kurzem Anwendung finden, berücksichtigen die üblicherweise verwendeten Regelungsverfahren lediglich eine Erwärmung der Halbleiterlichtquellen in größeren Zeiträumen, also über eine längere Betrachtungsperiode hinweg. Als Beispiel kann ein übliches Verfahren genannt werden, bei dem die Temperatur des oder der mit den Halbleiterlichtquellen verbundenen Kühlkörpern gemessen wird, und die Ansteuerung der Halbleiterlichtquellen entsprechend der Kühlkörpertemperatur angepasst wird. Dies berücksichtigt nur Langzeiteffekte, aber nicht die sofortige Erwärmung der Halbleiterlichtquellen, die bei einer Ansteuerung mit kurzen, Leistungsstarken Pulsen stattfindet. Da die Pulspausen mitunter recht lang sein können, hat die Halbleiterlichtquelle bis zum nächsten Puls genügend Zeit abzukühlen, so dass die durchschnittliche Belastung über die Zeit nicht zu hoch ausfällt.

Die Halbleiterlichtquelle erwärmt sich jedoch während eines solchen Pulses so stark, dass die abgegebene Lichtmenge während des Pulses nicht gleichbleibt, sondern kontinuierlich zurückgeht. Dies kann bei Displayanwendungen zur Beeinträchtigung der Hinterleuchtungsqualität, und damit der Bildqualität führen, und ist daher unerwünscht.

Aufgabe

Der Erfindung liegt daher die Aufgabe zugrunde, ein Regelungsverfahren anzugeben, bei dem die abgegebene Lichtmenge einer Halbleiterlichtquellen über die Dauer eines Ansteuerpulses gleichbleibt. Diese Aufgabe wird durch die Merkmale des Patentanspruchs 1 gelöst.

Eine weitere Aufgabe ist es, eine Schaltungsanordnung anzugeben, die das erfindungsgemäße Regelungsverfahren implementiert hat und eine Halbleiterlichtquelle so betreibt, dass die abgegebene Lichtmenge der Halbleiterlichtquelle über die Pulsdauer im wesentlichen gleich bleibt. Diese Aufgabe wird gelöst durch die Merkmale des Anspruchs 4.

Besonders vorteilhafte Ausführungen der Erfindung sind in den abhängigen Ansprüchen beschrieben.

Darstellung der Erfindung

Zur Lösung des Problems wird ein Regelungsverfahren für Halbleiterlichtquellen vorgeschlagen, bei dem der charakteristische Lichtabfall einer Halbleiterlichtquelle in Abhängigkeit von der in die Halbleiterlichtquelle eingebrachten Leistung in dem Betriebsgerät abgespeichert ist und das Betriebsgerät die in die Halbleiterlichtquelle eingebrachte Leistung während der Pulsdauer derart variiert, dass die abgegebene Lichtmenge der Halbleiterlichtquelle über die Pulsdauer im wesentlichen gleichbleibt.

Kurze Beschreibung der Zeichnung(en)

Fig. 1    Gemessener Lichtstromabfall 23 während eines Pulses mit einem konstantem Strom 21 von ca. 5, 7 A

Fig. 2    Gemessener (25) und simulierter (27) charakteristischer Lichtstromabfall während eines Pulses.

Fig. 3a    Applikationsschaltung einer Implementation des erfindungsgemäßen Regelungsverfahrens.

Fig. 3b    Alternative Applikationsschaltung einer Implementation des erfindungsgemäßen Regelungsverfahrens.

Fig. 4    Leuchtdiodenstrom 22 und Lichtstrom 24 über der Zeit nach dem erfindungsgemäßen Regelungsverfahren.

Bevorzugte Ausführung der Erfindung

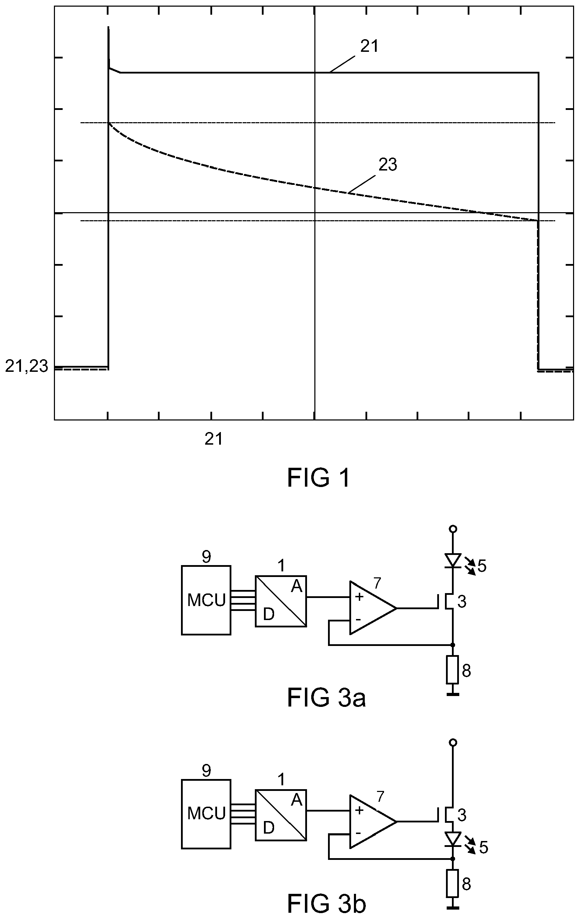

Fig. 1 zeigt die Messung der Lichtabgabe einer rotes Licht ausstrahlenden Leuchtdiode während eines Pulses. Es ist deutlich zu erkennen, dass der Lichtstrom 23 der Leuchtdiode innerhalb der Pulsdauer stark absinkt. Dies ist auf die starke Erwärmung des Leuchtdiodenchips während der Pulsdauer zurückzuführen. Da diese Erwärmung während einer so kurzen Zeit stattfindet, kann eine Regelung nach dem Stand der Technik, die üblicherweise die Kühlkörpertemperatur zur Grundlage hat, nicht greifen. Da die Stromaufnahme während des gesamten Pulses praktisch gleichbleibt, die Lichtabgabe aber zurückgeht, wird immer mehr Energie in Wärme anstatt in Licht verwandelt. Dies hat den Effekt, dass die Effizienz der Leuchtdiode weiter sinkt, und die Lichtabgabe stärker zurückgeht. Da sich die Leuchtdiode in den Pulspausen wieder genügend abkühlen kann, ist die Belastung der Leuchtdiode innerhalb der Spezifikationen. Allerdings ist der Lichtabfall innerhalb des Pulses unerwünscht und führt zur Verschlechterung der Bildqualität.

Die Lichtabgabe über der Zeit folgt einer e-Funktion und kann durch folgende Gleichung dargestellt werden:

$$y = y_0 + A * e^{-\frac{t}{t_0}}$$

Im vorliegenden Fall einer rotes Licht ausstrahlenden Leuchtdiode wird die Lichtabgabe durch folgende Werte repräsentiert:

| $y_0$ | A | $t_0$ |
|---|---|---|
| 12,7 | 11,0 | 1642,7 |

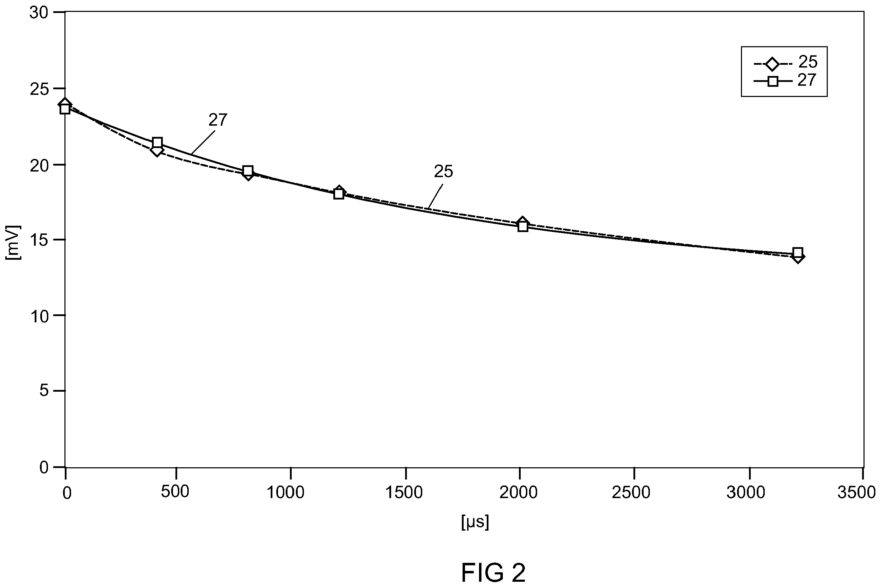

Diese Werte ergeben die Kurve 27 in Fig. 2, die von dem gemessenen Verlauf 25 nur geringfügig abweicht. Sobald der Lichtverlauf bekannt ist, kann dem Lichtstromabfall mittels einer Vorwärtsregelung entgegengesteuert werden. Fig. 3 zeigt beispielhaft einen Schaltungsaufbau, mit dem das erfindungsgemäße Regelungsverfahren realisiert werden kann. Ein Digital/Analog-Wandler 1 wandelt den von einer Steuerschaltung (9) ausgegebenen Stromvorgabewert mittels eines Komparators 7 und des Längsregeltransistors 3 in einen Stromistwert für die Leuchtdiode 5 um. Es können natürlich auch mehrere Leuchtdioden in Serie geschaltet sein. Die Leuchtdiode selber kann an verschiedenen Orten im Strompfad liegen, wie aus Fig. 3a und 3b zu entnehmen ist. Der Digital/Analog-Wandler kann natürlich auch in der Steuerschaltung (9) integriert sein. Der Shunt 8 dient zur Erzeugung des Stromistwertes für den Komparator 7. Die Steuerschaltung (9) gibt erfindungsgemäß nun keinen konstanten Stromwert während des Pulses vor, sondern einen derart steigenden Stromwert, dass der Lichtstrom der Leuchtdiode während der gesamten Pulsdauer gleichbleibt. Dadurch, dass in der Steuerschaltung der charakteristische Lichtabfall der Leuchtdioden abgespeichert ist, kann diese einen Stromvorgabewert generieren, bei dem die abgegebene Lichtmenge der Leuchtdiode über die gesamte Pulsdauer im wesentlichen gleich bleibt.

Um verschiedenen Stromstärken und verschiedenen Ausgangstemperaturen gerecht zu werden, kann der charakteristische Lichtabfall als Kennfeld in der Steuerschaltung abgespeichert sein.

Um Speicherplatz in der Steuerschaltung zu sparen, ist es aber auch denkbar, dass der charakteristische Lichtabfall als mathematische Beziehung in der Steuerschaltung abgespeichert ist, und der Stromvorgabewert aus der mathematischen Beziehung unter Zuhilfenahme der relevanten Messgrößen jeweils berechnet wird. Denkbar ist allerdings auch eine Mischform, bei der von den relevanten Messgrößen abgeleitete Hilfswerte in einer Tabelle abgespeichert sind, und der Stromvorgabewert mit den Hilfswerten und einer abgespeicherten mathematischen Beziehung berechnet wird.

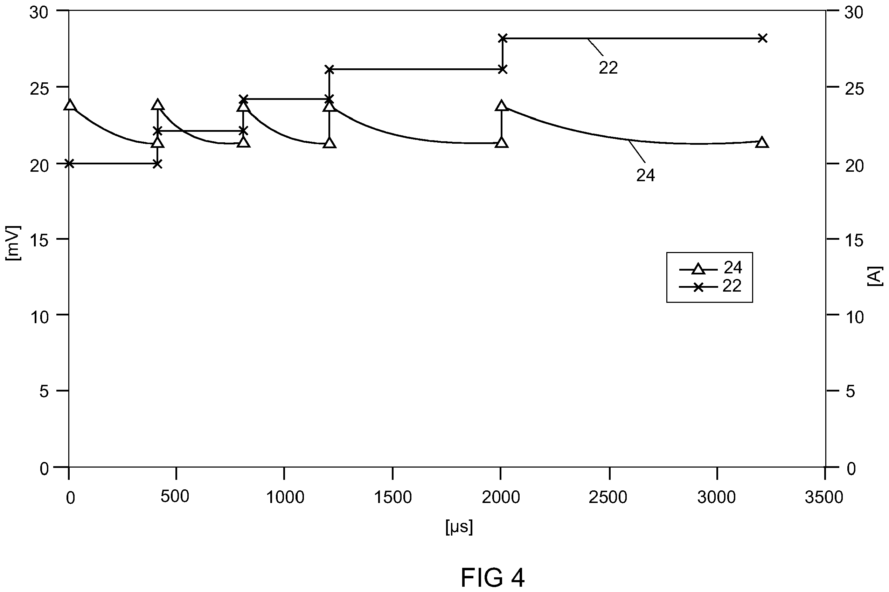

Das Resultat dieses Vorgehens ist wieder beispielhaft für eine rote Leuchtdiode in Fig. 4 gezeigt. Hier ändert sich der Stromvorgabewert und somit der Leuchtdiodenstrom 22 während der Pulsdauer, so dass die resultierende Lichtabgabe der Leuchtdiode oder der Leuchtdioden während der gesamten Pulsdauer im wesentlichen gleich bleibt. Eine Regelung nach dem Stand der Technik, bei der die in die Leuchtdioden eingebrachte Leistung abhängig von der Kühlkörpertemperatur ist, kann der Vorwärtsregelung überlagert werden. Damit kann auch der langfristige Rückgang des Lichtes ausgeregelt werden.

Das erfindungsgemäße Regelungsverfahren kann selbstverständlich auch für jede andere Halbleiterlichtquelle, wie z.B. eine OLED, verwendet werden.

**Patentansprüche**

1.    Regelungsverfahren für Halbleiterlichtquellen, wobei die Halbleiterlichtquellen von einem Betriebsgerät mit kurzen, leistungsstarken Pulsen betrieben werden, wobei der charakteristische, durch die starke Erwärmung des Halbleiterchips bedingte Lichtabfall einer Halbleiterlichtquelle in Abhängigkeit von der in die Halbleiterlichtquelle eingebrachten Leistung im Betriebsgerät gespeichert ist, **dadurch gekennzeichnet, dass** die eingebrachte Leistung innerhalb eines Pulses derart verändert wird, dass die abgegebene Lichtmenge dieser Halbleiterlichtquelle innerhalb der Pulsdauer im wesentlichen gleichbleibt.

**2.** Regelungsverfahren nach Anspruch 1, wobei der charakteristische Lichtabfall in Form eines Kennfeldes gespeichert ist.

**3.** Regelungsverfahren nach Anspruch 1, **dadurch gekennzeichnet, dass** der charakteristische Lichtabfall in Form einer mathematischen Formel gespeichert ist.

**4.** Schaltungsanordnung zum Betrieb von Halbleiterlichtquellen, wobei die Halbleiterlichtquellen von der Schaltungsanordnung mit kurzen, leistungsstarken Pulsen betrieben werden, und eine Steuerschaltung (9) über einen Digital/Analog-Wandler (1) einen Stromsollvorgabewert in einen Komparator (7) eingibt, dessen Ausgang wiederum mit dem Eingang eines Transistors (3) verschaltet ist und der einen dem Stromsollvorgabewert entsprechenden Strom in die Halbleiterlichtquelle oder die Halbleiterlichtquellen einprägt, wobei der charakteristische durch die starke Erwärmung des Halbleiterchips bedingte Lichtstromabfall der Halbleiterlichtquellen in der Steuerschaltung (9) abgespeichert ist, **dadurch gekennzeichnet, dass** die Steuerschaltung die eingebrachte Leistung innerhalb eines Pulses derart verändert, dass die abgegebene Lichtmenge der Halbleiterlichtquellen innerhalb der Pulsdauer im wesentlichen gleichbleibt.

**5.** Schaltungsanordnung nach Anspruch 4, wobei der Analog/Digital-Wandler in die Steuerschaltung integriert ist.

**6.** Schaltungsanordnung nach Anspruch 4 oder 5, wobei die Steuerschaltung einen Mikrocontroller enthält.

**7.** Schaltungsanordnung nach Anspruch 4 oder 5, **dadurch gekennzeichnet, dass** die Steuerschaltung einen DSP (Digitalen Signal Prozessor) enthält.

**Claims**

**1.** Control method for semiconductor light sources, wherein the semiconductor light sources are operated with short, powerful pulses by an operating device, wherein the characteristic light decrease of a semiconductor light source that is caused by the great heating of the semiconductor chip is stored depending on the power introduced into the semiconductor light source in the operating device, **characterized in that** the introduced power within a pulse is varied in such a way that the emitted quantity of light of said semiconductor light source substantially remains constant within the pulse duration.

**2.** Control method according to Claim 1, wherein the characteristic light decrease is stored in the form of a family of characteristic curves.

**3.** Control method according to Claim 1, **characterized in that** the characteristic light decrease is stored in the form of a mathematical formula.

**4.** Circuit arrangement for operating semiconductor light sources, wherein the semiconductor light sources are operated with short, powerful pulses by the circuit arrangement, and a control circuit (9) inputs, via a digital/analogue converter (1), a setpoint predefined current value into a comparator (7), the output of which in turn is connected up to the input of a transistor (3) and which impresses a current corresponding to the setpoint predefined current value into the semiconductor light source or the semiconductor light sources, wherein the characteristic luminous flux decrease of the semiconductor light sources that is caused by the great heating of the semiconductor chip is stored in the control circuit (9), **characterized in that** the control circuit varies the introduced power within a pulse in such a way that the emitted quantity of light of the semiconductor light sources substantially remains constant within the pulse duration.

**5.** Circuit arrangement according to Claim 4, wherein the analogue/digital converter is integrated into the control circuit.

**6.** Circuit arrangement according to Claim 4 or 5, wherein the control circuit contains a microcontroller.

**7.** Circuit arrangement according to Claim 4 or 5, **characterized in that** the control circuit contains a DSP (digital signal processor).

**Revendications**

**1.** Procédé de réglage de sources de lumière semi-conductrices, les sources de lumière semi-conductrices fonctionnant avec un équipement de commande à impulsions courtes et puissantes, l'atténuation caractéristique de la lumière d'une source de lumière semi-conductrice, due au fort réchauffement de la puce semi-conductrice, étant sauvegardée dans l'équipement de commande en fonction de la puissance introduite dans la source de lumière semi-conductrice,
**caractérisé en ce que**
la puissance introduite dans les limites d'une impulsion est modifiée de telle sorte que la quantité de lumière émise de cette source de lumière semi-conductrice reste sensiblement identique dans les limites de la durée de l'impulsion.

**2.** Procédé de réglage selon la revendication 1, l'atténuation caractéristique de la lumière étant sauvegardée sous la forme d'un diagramme caractéristique.

**3.** Procédé de réglage selon la revendication 1, **caractérisé en ce que** l'atténuation caractéristique de la lumière est sauvegardée sous la forme d'une formule mathématique.

**4.** Circuit pour faire fonctionner des sources de lumière semi-conductrices, le circuit faisant fonctionner les sources de lumière semi-conductrices au moyen d'impulsions courtes et puissantes, et un circuit de commande (9) introduisant, via un convertisseur numérique / analogique (1), une valeur donnée de courant de consigne dans un comparateur (7) dont la sortie est, quant à elle, interconnectée à l'entrée d'un transistor (3) et qui injecte un courant correspondant à la valeur donnée de courant de consigne dans la source de lumière semi-conductrice ou les sources de lumière semi-conductrices, l'atténuation caractéristique du flux lumineux des sources de lumière semi-conductrices due au fort réchauffement de la puce semi-conductrice étant sauvegardée dans le circuit de commande (9), **caractérisé en ce que** le circuit de commande modifie la puissance introduite dans les limites d'une impulsion de telle sorte que la quantité de lumière émise des sources de lumière semi-conductrices reste sensiblement identique dans les limites de la durée de l'impulsion.

**5.** Circuit selon la revendication 4, le convertisseur analogique / numérique étant intégré dans le circuit de commande.

**6.** Circuit selon la revendication 4 ou 5, le circuit de commande comportant un microcontrôleur.

**7.** Circuit selon la revendication 4 ou 5, **caractérisé en ce que** le circuit de commande comporte un DSP (Digitalen Signal Prozessor).

**FIG 1**

**FIG 3a**

**FIG 3b**

FIG 2

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1594346 A2
- US 20060245174 A1
- US 20020196595 A1